# FASCICULE DE BREVET EUROPEEN

(11) **EP 1 590 222 B1**
(45) Date de publication et mention de la délivrance du brevet: **17.05.2006**
(21) Numéro de dépôt: 04705089.3
(22) Date de dépôt: 26.01.2004
(51) Int. Cl.: B60T 13/575

(54) **SERVOFREIN COMPORTANT UN PISTON DE DECOMPRESSION INTEGRE A LA TIGE DE POUSSEE**
SERVOBREMSSYSTEM MIT IN DER DRUCKSTANGE IM HAUPTZYLINDERINTEGRIERTEM DEKOMPRESSIONSKOLBEN
SERVO BRAKE SYSTEM COMPRISING A DECOMPRESSION PISTON INTEGRATED IN THE PUSHROD

(30) Priorité: 27.01.2003 FR 0300884
(43) Date de publication de la demande: 02.11.2005
(73) Titulaire: BOSCH SISTEMAS DE FRENADO, S.L., 08080 Barcelona 6 (ES)
(72) Inventeur: SACRISTAN, Fernando, E-08348 Barcelone (ES); SIMON BACARDIT, Juan, E-08013 Barcelone (ES); BERTHOMIEU, Bruno, E-08003 Barcelone (ES)
(74) Mandataire: Hurwic, Aleksander Wiktor
(86) Numéro de dépôt international: PCT/EP2004/000619
(87) Numéro de publication internationale: WO 2004/067345

(56) Documents cités:
- DE-A- 10 113 292
- DE-A- 19 917 281
- FR-A- 2 820 388

## Description

L'invention concerne un servofrein pour un véhicule automobile, selon le préambule de la revendication 1, connu du document FR-A-2 820 388.

L'invention concerne plus particulièrement un servofrein pour un véhicule automobile, du type qui comporte un servomoteur pneumatique d'assistance au freinage actionnant un maître-cylindre, du type dans lequel le servomoteur comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure à la première pression, du type dans lequel le servomoteur comporte un piston mobile, solidaire de la cloison mobile, qui comporte une face avant qui est susceptible de solliciter un piston primaire du maître-cylindre par l'intermédiaire d'un disque de réaction logé dans une cage interposée entre le piston mobile et le piston primaire, du type dans lequel le servomoteur comporte une tige de commande qui se déplace dans le piston sélectivement en fonction d'un effort axial d'entrée exercé vers l'avant à l'encontre d'un effort de rappel exercé sur la tige par un ressort de rappel, du type dans lequel le servomoteur comporte un plongeur qui est agencé à l'avant de la tige de commande dans le piston et qui comporte à son extrémité arrière au moins un siège annulaire arrière d'un clapet à trois voies qui est mobile progressivement entre une position dans laquelle, la tige de commande étant au repos, la chambre avant et la chambre arrière sont en communication, et une position dans laquelle, la tige de commande étant actionnée, la deuxième pression régnant dans la chambre arrière augmente, le clapet mettant la chambre arrière en communication avec la pression supérieure à la première pression, et du type dans lequel le servomoteur comporte un palpeur, agencé à l'extrémité avant du plongeur et traversant un alésage débouchant du piston qui, dans la position de repos de la tige de commande, est agencé à une distance de saut déterminée du disque de réaction et qui est susceptible, lorsque la tige de commande est actionnée suivant un effort d'entrée d'intensité supérieure à une première intensité déterminée, de venir au contact du disque de réaction de manière à transmettre au plongeur et à la tige de commande l'effort de réaction du maître-cylindre, le rapport de la surface du disque de réaction en contact avec la cage et de la surface du palpeur déterminant un premier rapport d'assistance déterminé, et du type dans lequel la cage comporte au moins une paroi mobile de décompression qui est susceptible, lorsque la tige de commande est actionnée suivant un effort d'entrée d'intensité supérieure à une seconde intensité déterminée supérieure à la première, de se déplacer pour créer dans la cage un volume supplémentaire dans lequel une partie avant du disque de réaction est susceptible de s'expandre pour réduire l'effort de réaction transmis au palpeur par l'intermédiaire de la face arrière du disque de réaction, le rapport de la surface du disque de réaction en contact avec la cage et de la surface du palpeur déterminant un second rapport d'assistance supérieur au premier.

On connaît de nombreux exemples de servofreins de ce type.

Dans un tel servofrein la paroi mobile de décompression fait généralement partie d'un dispositif qui est accolé à la cage et qui est interposé entre le disque de réaction et le piston primaire du maître-cylindre.

Ce dispositif est conventionnellement constitué d'un boîtier dont une face est accolée au disque de réaction et est percée pour permettre le passage d'un piston cylindrique de décompression qui est agencé lui aussi au contact du disque de réaction sensiblement dans l'axe du palpeur. Le piston de décompression est rappelé élastiquement vers le disque de réaction par un ressort hélicoïdal qui est logé à l'intérieur du boîtier et qui est sensiblement du même diamètre que le piston de décompression. Lorsque l'intensité de l'effort d'entrée dépasse la seconde valeur déterminée, le piston de décompression est repoussé dans le boîtier en comprimant le ressort hélicoïdal et il crée ainsi un volume libre qui permet la décompression du disque de réaction.

Cette conception présente de nombreux inconvénients en termes d'encombrement.

En effet, cette conception impose l'emploi d'un ressort hélicoïdal qui est sensiblement de même diamètre que le piston de décompression. Il est donc impossible de réduire le diamètre du ressort hélicoïdal sans réduire le diamètre du piston de décompression qui, dès lors, ne présente plus une surface propre à créer dans la cage un volume de décompression suffisant à amener une décompression adéquate du disque de réaction.

Inversement, l'emploi d'un piston de décompression d'une taille adéquate ne permet pas d'utiliser un ressort hélicoïdal de diamètre suffisamment réduit pour que le boîtier puisse par exemple être logé dans une tige de poussée interposée entre la cage et le piston primaire du maître cylindre.

Pour remédier à cet inconvénient, l'invention propose un servofrein comportant un piston de décompression de grande surface, apte à créer un volume de décompression adéquat pour le disque de réaction, et permettant néanmoins l'emploi d'un ressort hélicoïdal de taille réduite.

Dans ce but, l'invention propose un servofrein du type décrit précédemment, caractérisé en ce qu'il comporte une tige de poussée indépendante, qui est interposée entre le disque de réaction et le piston primaire du maître cylindre, et qui comporte :
- un tronçon arrière, dont une face arrière est agencée au contact du disque de réaction, et dans lequel une lumière débouchant dans la face arrière reçoit un piston de décompression conforme, d'un encombrement transversal déterminé, qui comporte au moins deux branches radiales et dont une face arrière forme la paroi mobile de décompression,
- un tronçon avant tubulaire, dont un alésage qui débouche à l'extrémité avant de la lumière, et qui est d'un diamètre inférieur à l'encombrement transversal déterminé, reçoit un ressort hélicoïdal recevant une tige de rappel du piston de décompression,
pour proposer un piston de décompression d'encombrement transversal maximal et une tige de poussée de diamètre minimal.

Selon d'autres caractéristiques de l'invention :
- à la jonction du tronçon avant et du tronçon arrière :
   - le tronçon arrière comporte au moins une face qui forme butée axiale pour le ressort de rappel du piston de décompression, qui est agencée angulairement entre deux branches consécutives du piston de décompression, et qui fait saillie transversalement à l'intérieur de l'alésage,
   - le tronçon avant comporte au moins une face qui forme butée axiale pour le piston de décompression, qui est agencée dans le prolongement axial d'au moins une des deux branches du piston de décompression, et qui fait saillie à l'intérieur de la lumière,
- l'extrémité avant de chaque branche du piston de décompression comporte au moins une face d'appui pour le ressort hélicoïdal, qui est agencée suivant le diamètre du tronçon avant tubulaire,
- l'extrémité avant de chaque branche du piston de décompression comporte au moins une face de butée axiale destinée à coopérer avec la face de butée axiale du tronçon avant,
- la tige de rappel du piston de décompression est d'un diamètre correspondant sensiblement au diamètre intérieur du ressort hélicoïdal,
- la tige de poussée comporte une rondelle d'appui qui est montée entre le ressort hélicoïdal et la face d'appui du piston de décompression, qui est d'un diamètre extérieur correspondant à celui de l'alésage du tronçon avant et qui est d'un diamètre intérieur correspondant à celui de la tige de rappel du piston de décompression,
- la tige de poussée comporte :
   - une partie avant tubulaire qui comporte une partie du tronçon avant,
   - une partie arrière qui comporte intérieurement l'autre partie du tronçon avant et le tronçon arrière.
- la partie avant est montée serrée dans l'alésage d'extrémité avant de la partie arrière,
- la partie avant est sertie sur une portée cylindrique d'extrémité avant de la partie arrière suivant une position axiale variable permettant de régler la précharge du ressort hélicoïdal,- la partie avant tubulaire comporte à son extrémité avant un doigt axial destiné à permettre l'appui de la tige de poussée sur le piston primaire du maître-cylindre,
- le piston de décompression comporte trois branches réparties angulairement de manière régulière,
- le piston de décompression comporte deux branches opposées qui s'étendent radialement jusqu'à la périphérie de la face arrière du tronçon arrière.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un servofrein selon un état antérieur de la technique ;
- la figure 2 est une vue en coupe axiale d'un servofrein réalisé conformément à l'invention ;
- la figure 3 est une vue de détail d'un servomoteur faisant partie d'un servofrein selon l'invention et comportant un premier mode de réalisation d'une tige de poussée, représenté dans une position d'actionnement de la tige de commande selon un effort d'intensité inférieure à la première intensité déterminée ;
- la figure 4 est une vue de détail du servomoteur de la figure 3 représenté dans une position d'actionnement de la tige de commande selon un effort d'intensité supérieure à la première intensité déterminée et inférieure à la seconde intensité déterminée ;
- la figure 5 est une vue de détail du servomoteur de la figure 3 représenté dans une position d'actionnement de la tige de commande selon un effort d'intensité supérieure à la seconde intensité déterminée ;
- la figure 6 est une vue en perspective assemblée d'une variante du premier mode de réalisation de la tige de poussée du servomoteur des figures 3 à 5 ;
- la figure 7A est une vue en perspective éclatée de l'avant de la partie arrière de la tige de poussée des figures 3 à 5 ;
- la figure 7B est une vue en perspective éclatée de l'arrière de la partie arrière de la tige de poussée des figures 3 à 5 ;
- la figure 8 est une vue en perspective assemblée d'un second mode de réalisation de la tige de poussée du servomoteur;
- la figure 9A est une vue en perspective éclatée de l'avant de la partie arrière de la tige de poussée de la figure 8 ;
- la figure 9B est une vue en perspective éclatée de l'arrière de la partie arrière de la tige de poussée de la figure 8.

Dans la description qui va suivre, des chiffres de référence identiques désignent des pièces identiques ou ayant des fonctions similaires.

Par convention, les termes "avant", "arrière", supérieur", "inférieur" désignent respectivement des éléments ou des positions orientés respectivement vers la gauche, la droite, le haut, ou le bas des figures.

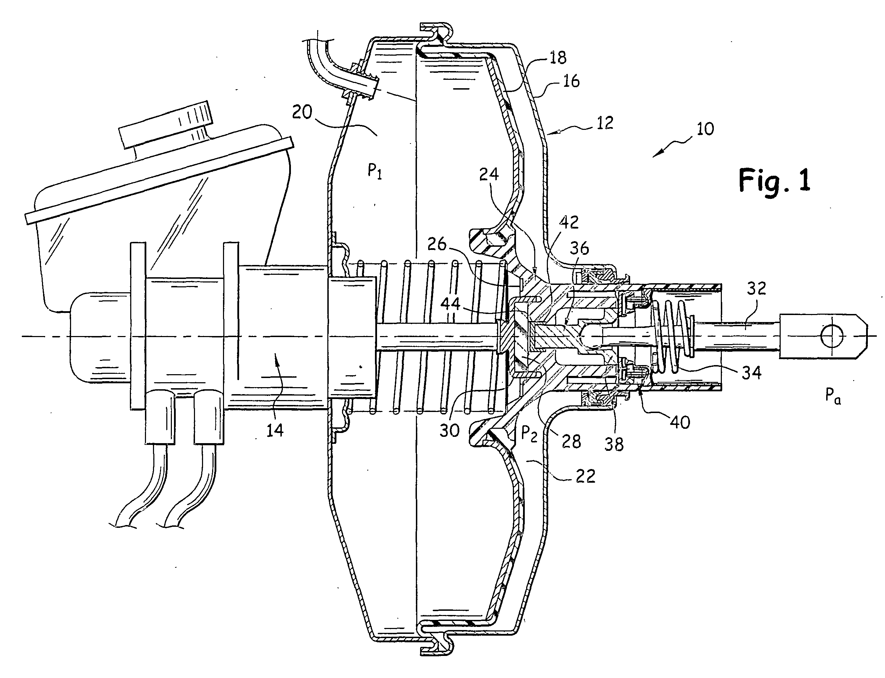

On a représenté à la figure 1 l'ensemble d'un servofrein 10 pour un véhicule automobile.

De manière connue, le servofrein 10 comporte un servomoteur 12 pneumatique d'assistance au freinage qui est destiné à actionner un maître-cylindre 14.

Le servomoteur 12 comporte une enveloppe 16 rigide à l'intérieur de laquelle est mobile une cloison 18 transversale délimitant de façon étanche une chambre avant 20, soumise à une première pression "P₁", et une chambre arrière 22 soumise à une deuxième pression P₂" variant entre la première pression "P₁" et une pression "Pₐ" supérieure à la première pression "P₁".

De manière connue, le servomoteur 12 comporte un piston mobile 24, solidaire de la cloison mobile 18, qui comporte une face avant 26 qui est susceptible de solliciter un piston primaire du maître-cylindre 14 par l'intermédiaire d'un disque 28 de réaction. Le disque 28 de réaction est logé dans une cage 30 qui est interposée entre le piston mobile 24 et le piston primaire (non représenté).

Le servomoteur 12 comporte aussi une tige 32 de commande qui se déplace dans le piston 24 sélectivement en fonction d'un effort axial d'entrée exercé vers l'avant à l'encontre d'un effort de rappel exercé sur la tige 32 par un ressort 34 de rappel.

Le servomoteur 12 comporte un plongeur 36 qui est agencé à l'avant de la tige 32 de commande dans le piston 24 et qui comporte à son extrémité arrière 38 au moins un siège annulaire arrière d'un clapet 40 à trois voies qui est mobile progressivement entre une position dans laquelle, la tige 32 de commande étant au repos, la chambre avant 20 et la chambre arrière 22 sont en communication, et une position dans laquelle, la tige 32 de commande étant actionnée, la deuxième pression "P₂" régnant dans la chambre arrière 22 augmente, le clapet 40 mettant la chambre arrière 22 en communication avec la pression "Pₐ" supérieure à la première pression.

Le servomoteur 12 comporte un palpeur 42, agencé à l'extrémité avant du plongeur 36 et traversant un alésage 44 débouchant du piston 24 qui, dans la position de repos de la tige 32 de commande, est agencé à une distance de saut déterminée du disque 28 de réaction, et qui est susceptible, lorsque la tige 32 de commande est actionnée suivant un effort d'entrée d'intensité supérieure à une première intensité déterminée, de parcourir la distance de saut et de venir au contact du disque 28 de réaction de manière à transmettre au plongeur 42 et à la tige 32 de commande l'effort de réaction du maître-cylindre 14.

Dans cette configuration, le rapport de la surface du disque 28 de réaction en contact avec la cage 30 et de la surface du palpeur 42 en contact avec le disque 28 de réaction déterminent de manière connue un premier rapport d'assistance déterminé.

L'inconvénient de cette conception connue est que, lorsque la tige de commande est actionnée rapidement suivant un effort d'entrée d'intensité supérieure à la première intensité déterminée, le retard à l'équilibrage des pressions entre les chambres avant 20 et arrière 22 ne permet pas au piston mobile 24 d'assister suffisamment l'effort de freinage du conducteur qui doit par ailleurs surmonter l'effort de réaction que le maître cylindre 14 exerce sur la tige 32 par l'intermédiaire du disque 28 de réaction.

Pour remédier à cet inconvénient, on a proposé un servofrein 10 (non représenté) du type décrit précédemment, dans lequel la cage 30 comporte au moins une paroi mobile de décompression qui est susceptible, lorsque la tige 32 de commande est actionnée suivant un effort d'entrée d'intensité supérieure à une seconde intensité déterminée supérieure à la première, de se déplacer pour créer dans la cage 30 un volume supplémentaire dans lequel une partie avant du disque 28 de réaction est susceptible de s'expandre en regard du palpeur 42.

De cette manière, une partie arrière du disque 28 de réaction est susceptible de se décomprimer localement au niveau du palpeur 42, ce qui permet de réduire l'effort de réaction transmis au palpeur 42 par l'intermédiaire de la face arrière du disque de réaction.

Par ailleurs, dans cette configuration, la surface du palpeur 42 en contact avec le disque de réaction étant réduite, le rapport d'assistance déterminé augmente. Ce second rapport d'assistance est donc supérieur au premier.

Dans un tel servofrein la paroi mobile de décompression fait généralement partie d'un dispositif de décompression qui est accolé à la cage et qui est interposé entre le disque de réaction et le piston primaire du maître-cylindre.

Ce servofrein (non représenté) comporte conventionnellement un boîtier, solidaire du piston primaire du maître cylindre, dont une face est accolée au disque de réaction et est percée pour permettre le passage d'un piston cylindrique de décompression qui est agencé lui aussi au contact du disque de réaction. Le piston de décompression est rappelé élastiquement vers le disque de réaction par un ressort hélicoïdal qui est logé à l'intérieur du boîtier et qui est sensiblement du même diamètre que le piston de décompression. Lorsque l'intensité de l'effort d'entrée dépasse la seconde valeur déterminée, le piston de décompression est repoussé dans le boîtier en comprimant le ressort hélicoïdal et il crée ainsi un volume libre qui permet la décompression du disque de réaction.

Cette conception présente de nombreux inconvénients en termes d'encombrement.

En effet, cette conception impose l'emploi d'un ressort hélicoïdal qui est sensiblement de même diamètre que le piston de décompression. Il est donc impossible de réduire le diamètre du ressort hélicoïdal sans réduire le diamètre du piston de décompression qui, dès lors, ne présente plus une surface propre à créer dans la cage un volume de décompression suffisant à amener une décompression adéquate du disque de réaction.

Inversement, l'emploi d'un piston de décompression d'une taille adéquate ne permet pas d'utiliser un ressort hélicoïdal de diamètre suffisamment réduit pour que le boîtier puisse par exemple être intégré dans une tige de poussée interposée entre la cage et le piston primaire du maître cylindre.

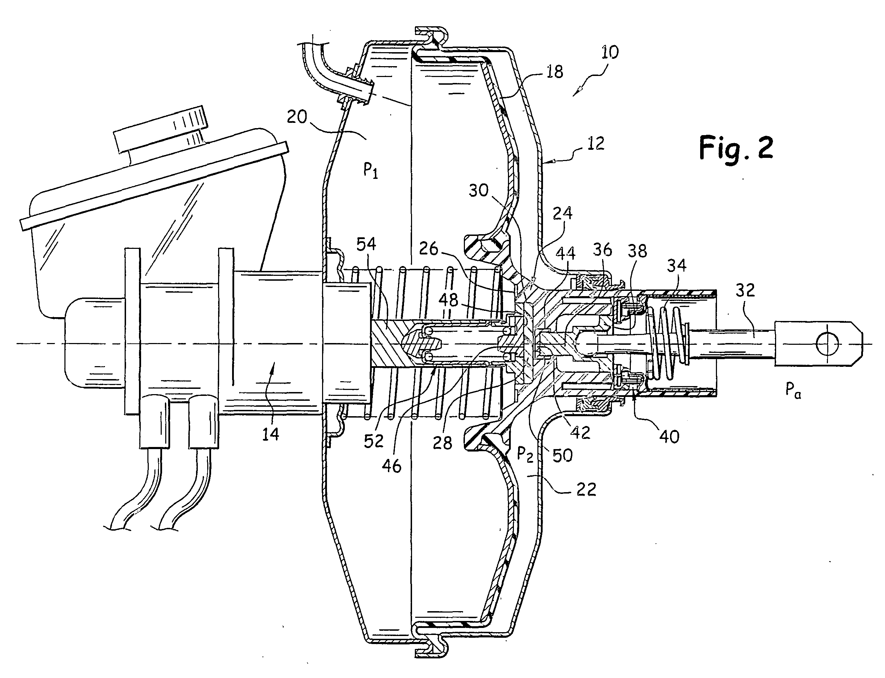

Pour remédier à cet inconvénient, comme l'illustrent les figures 2 et suivantes, l'invention propose un servofrein 10 du type décrit précédemment comportant un dispositif de décompression compact.

De manière connue, le servofrein 10 est muni d'une cage 30, formée dans le piston 24, dont au moins une paroi 46 mobile de décompression est susceptible, lorsque la tige 32 de commande est actionnée suivant un effort d'entrée d'intensité supérieure à une seconde intensité déterminée supérieure à la première, de se déplacer pour créer dans la cage 30 un volume supplémentaire dans lequel une partie avant 48 du disque 28.de réaction est susceptible de s'expandre pour réduire l'effort de réaction transmis au palpeur 42 par l'intermédiaire de la face arrière 50 du disque 28 de réaction.

Plus particulièrement, conformément à l'invention et comme l'illustrent les figures 2 et suivantes, le servomoteur 12 comporte une tige 52 de poussée indépendante, qui est interposée entre le disque 28 de réaction et le piston primaire 54 du maître cylindre 14, et qui comporte un tronçon arrière 56, dont une face arrière 58 est agencée au contact du disque 28 de réaction, et dans lequel une lumière 60 débouchant dans la face arrière 58 reçoit un piston 62 de décompression conforme, d'un encombrement transversal "E" déterminé, qui comporte au moins deux branches radiales 64 et dont une face arrière forme la paroi mobile 46 de décompression.

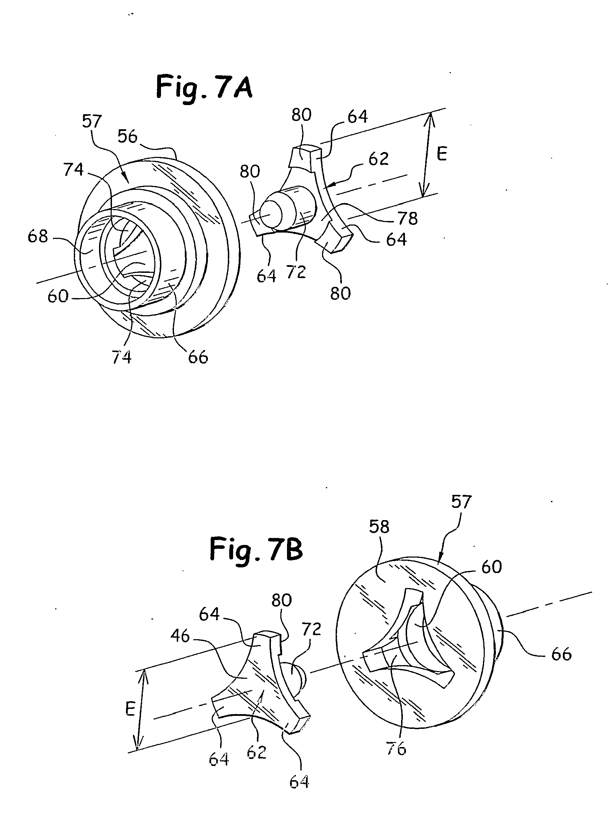

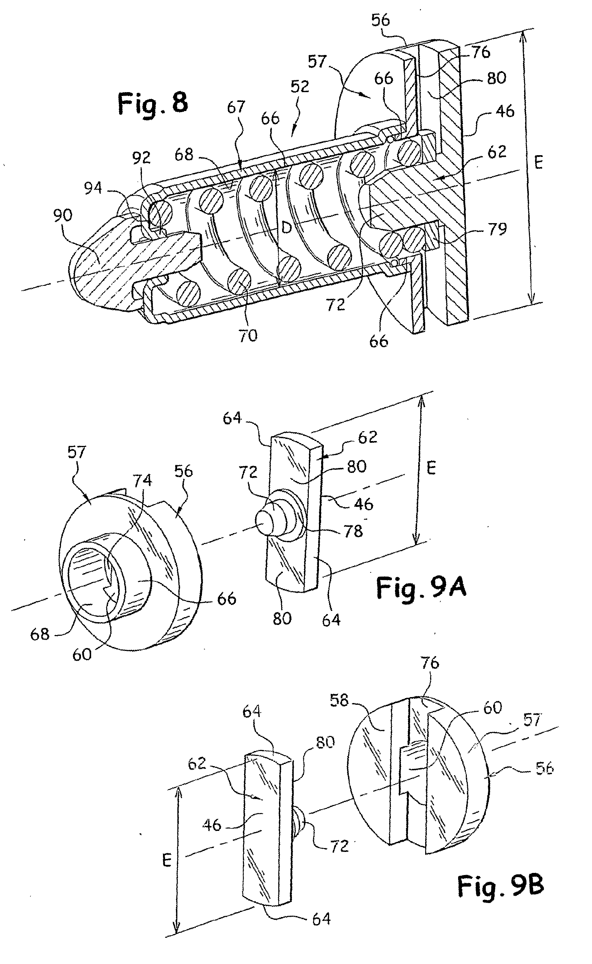

Les figures 7A et 7B représentent un premier mode réalisation d'un piston 62 comportant trois branches radiales 64 réparties angulairement de manière régulière, et les figures 9A et 9B représentent un second mode de réalisation de l'invention comportant deux branches radiales 64 qui s'étendent radialement jusqu'à la périphérie de la face arrière 58 du tronçon arrière 56.

Il sera compris que ces dispositions ne sont nullement limitatives de l'invention et que le piston 62 pourrait comporter un nombre supérieur de branches 64, par exemple, quatre, cinq ou six branches radiales 64.

La tige 52 de poussée indépendante comporte aussi un tronçon avant tubulaire 66, dont un alésage 68 qui débouche à l'extrémité avant de la lumière 60, et qui est d'un diamètre "D" inférieur à l'encombrement transversal "E" déterminé, reçoit un ressort 70 hélicoïdal recevant une tige 72 de rappel du piston 62 de décompression. De préférence, la tige 72 de rappel du piston de décompression est d'un diamètre correspondant sensiblement au diamètre intérieur du ressort hélicoïdal 70.

De cette manière, le servofrein 10 propose un piston 62 de décompression d'encombrement "E" transversal maximal et une tige 52 de poussée de diamètre minimal, sensiblement voisin au diamètre "D" de son alésage 68.

Il sera compris que les tronçons avant 66 et arrière 56 sont associés respectivement à l'alésage 68 et à la lumière 60, et qu'ils ne sont pas nécessairement indépendants. Ainsi, dans les modes de réalisation préféré de l'invention, la tige 52 de poussée comporte une partie avant 67 tubulaire qui comporte une partie du tronçon avant 66, et une partie arrière 57 qui comporte intérieurement l'autre partie du tronçon avant 66, et donc l'autre partie de l'alésage 68, et le tronçon arrière 56.

Plus particulièrement, comme l'illustrent les figures 7A et 9A, à la jonction du tronçon avant 66 et du tronçon arrière 56, le tronçon arrière 56 comporte au moins une face 74 qui forme butée axiale pour le ressort 70 de rappel du piston 62 de décompression

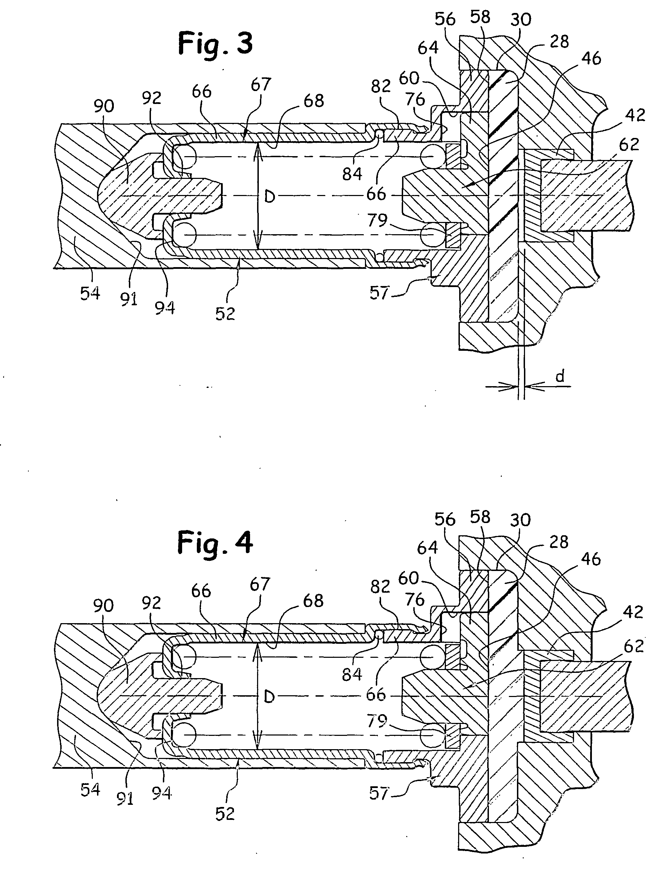

La face 74, agencée à l'extrémité de la lumière 60, est agencée angulairement entre deux branches 64 consécutives du piston 62 de décompression, et elle fait saillie transversalement à l'intérieur de l'alésage 68. Ainsi, la partie arrière 57 associée au piston 62 à trois branches 64 des figures 3 à 7B comporte trois faces 74 réparties entre les trois branches de la lumière 60 correspondant aux trois branches 64 du piston 62, tandis que la partie arrière 57 associée au piston 62 à deux branches 64 des figures 8 à 9B comporte deux faces 74 réparties entre les deux branches de la lumière 60 correspondant aux deux branches 64 du piston 62.

Par ailleurs, comme l'illustrent les figures 3 à 6, 7B, 8 et 9B, le tronçon avant 66 comporte, dans la partie arrière 57, au moins une face 76 qui forme butée axiale pour le piston 62 de décompression. La face 76 est agencée dans le prolongement axial d'au moins une des deux branches 64 du piston 62 de décompression, et elle fait saillie à l'intérieur de la lumière 60. Chaque partie arrière 57 comporte donc autant de faces 76 de butée que le piston 62 comporte de branches 64.

Comme l'illustrent les figures 7A et 9A, pour permettre le rappel du piston 62 tout en conservant un piston 62 qui présente des formes simples et qui soit compact axialement, l'extrémité avant de chaque branche 64 du piston 62 de décompression comporte au moins une face d'appui 78 pour le ressort hélicoïdal 70, qui est agencée suivant le diamètre du tronçon avant 66 tubulaire.

Dans les configurations décrites en référence au premier et au second modes de réalisation de l'invention, les faces 78 sont réparties sur toutes les branches 64 du piston 62. Le piston 62 de la figure 7A comporte ainsi trois faces 78 et le piston 62 de la figure 64 comporte une face 78 conformée sous la forme d'une face d'épaulement annulaire.

L'appui du ressort 70 sur la face 78 peut être direct, mais de préférence la tige 52 de poussée comporte une rondelle d'appui 79 qui est montée entre le ressort hélicoïdal 70 et la face d'appui 78 du piston 62 de décompression. Cette rondelle 79 est d'un diamètre extérieur correspondant à celui de l'alésage 68 du tronçon avant et elle est d'un diamètre intérieur correspondant à celui de la tige 72 de rappel du piston 62 de décompression

Ainsi, lorsque le piston 62 occupe sa position arrière des figures 3, 4, 6, et 8, le ressort 70 est en appui dans un même plan sur la face 78 du piston et la face 74 du tronçon arrière 56, ce qui permet de bénéficier d'une partie arrière 57 particulièrement compacte axialement.

De la sorte, la paroi mobile 46 est mobile comme représenté aux figures 3 à 5.

Dans une position initiale représentée à la figure 3, un effort d'entrée nul, ou d'intensité inférieure à une première intensité déterminée, est appliqué sur la tige 32 de commande. Dans cette configuration, le plongeur 42 ne sollicite pas le disque 28 de réaction et il est agencé à une distance "d" de saut de celui-ci.

Dans une position intermédiaire représentée à la figure 4, un effort d'entrée est appliqué sur la tige 32 de commande suivant un effort d'entrée d'intensité supérieur à la première intensité déterminée et inférieur à une seconde intensité déterminée. Dans cette configuration, le disque 28 de réaction se déforme et comble sensiblement la distance "d" de saut le séparant du palpeur 42 pour transmettre l'effort d'entrée au piston primaire 54 suivant le premier rapport d'assistance déterminé. Dans cette configuration, l'effort d'entrée étant inférieur au tarage du ressort 70, le piston 62 de décompression n'est pas sollicité et demeure dans l'alignement de la face arrière 58 du tronçon 56. Le disque 28 de réaction transmet au palpeur 42 l'intégralité de la réaction du maître-cylindre 14.

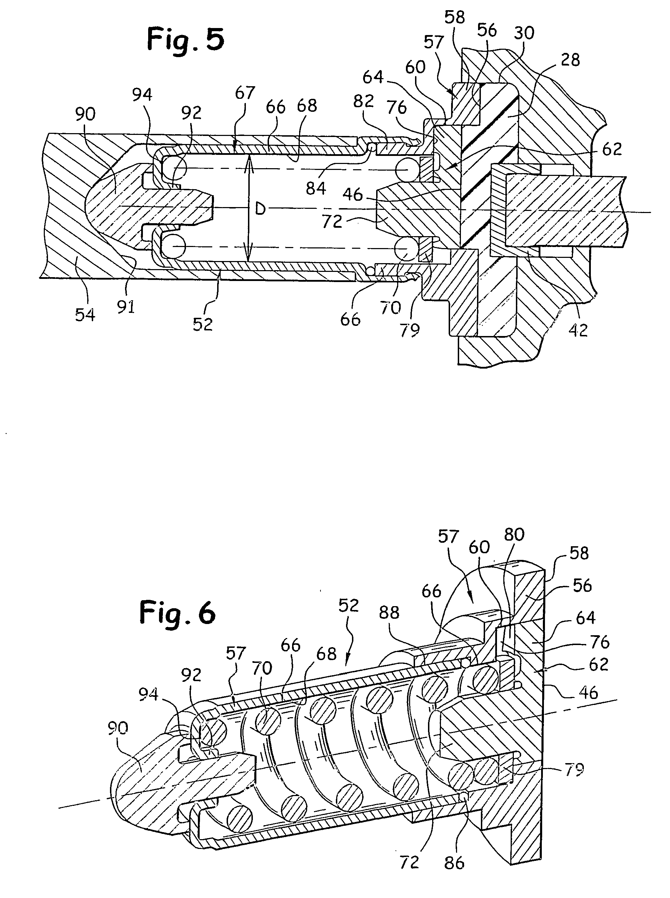

Dans la position de décompression, représentée à la figure 5, un effort d'entrée est appliqué sur la tige 32 de commande suivant un effort d'entrée d'intensité supérieur à la seconde intensité déterminée. Dans cette configuration, le palpeur 42 sollicite le disque 28 de réaction qui surmonte l'effort antagoniste du ressort 70 et le piston 62 de décompression s'enfonce dans la lumière 60 en décomprimant localement le disque 28 de réaction au contact du palpeur 46 . L'effort d'entrée est transmis au piston primaire 54 suivant le second rapport d'assistance déterminé qui est supérieur au premier. Le disque 28 de réaction ne transmet plus au palpeur 42 qu'une partie de la réaction du maître-cylindre 14.

Avantageusement, l'extrémité avant de chaque branche 64 du piston de décompression comporte aussi au moins une face 80 de butée axiale destinée à coopérer avec la face 76 de butée axiale du tronçon avant 66.

Dans les premier et second modes réalisation qui ont été représentés aux figures 3 à 5 et 8, la partie avant 67 est sertie sur une portée 82 cylindrique d'extrémité avant de la partie arrière 57 suivant une position axiale variable permettant de régler la précharge du ressort 70 hélicoïdal. Par exemple, une cale 84 peut être interposée entre les parties 67 et 57.

En variante, représentée à la figure 6, la partie avant pourrait être montée serrée dans un alésage 88 d'extrémité avant de la partie arrière 57. Dans ce cas, la précharge du ressort 70 est défini par la profondeur de l'emmanchement, qui peut être limité par une cale 86 logée au fond de l'alésage 88.

Enfin, on remarquera que l'invention permet de tirer parti de la conception tubulaire de la partie avant. Comme l'illustrent les figures 3 à 6 et 8, la partie avant 67 tubulaire reçoit à son extrémité avant un doigt axial 90, qui est par exemple serti dans une portée emboutie conforme 92 de l'extrémité avant de la partie avant 67, et qui est destiné à permettre l'appui de la tige 52 de poussée dans un alésage 91 du piston primaire 14. Avantageusement, la portée emboutie 92 délimite dans la partie avant 67 une cuvette 94 permettant l'appui du ressort 70.

## Revendications

1. Servofrein (10) pour un véhicule automobile, du type qui comporte un servomoteur (12) pneumatique d'assistance au freinage actionnant un maître-cylindre (14),
du type dans lequel le servomoteur (12) comporte une enveloppe (16) rigide à l'intérieur de laquelle est mobile une cloison (18) transversale délimitant de façon étanche une chambre avant (20), soumise à une première pression (P₁), et une chambre arrière (22) soumise à une deuxième pression (P₂) variant entre la première pression (P₁) et une pression (Pₐ) supérieure à la première pression (P₁),
du type dans lequel le servomoteur (12) comporte un piston mobile (24), solidaire de la cloison mobile (18), qui comporte une face avant (26) qui est susceptible de solliciter un piston primaire (54) du maître-cylindre (14) par l'intermédiaire d'un disque (28) de réaction logé dans une cage (30) interposée entre le piston mobile (24) et le piston primaire (54),
du type dans lequel le servomoteur (12) comporte une tige (32) de commande qui se déplace dans le piston (24) sélectivement en fonction d'un effort axial d'entrée exercé vers l'avant à l'encontre d'un effort de rappel exercé sur la tige (32) par un ressort (34) de rappel,
du type dans lequel le servomoteur (12) comporte un plongeur (36) qui est agencé à l'avant de la tige (32) de commande dans le piston (24) et qui comporte à son extrémité arrière (38) au moins un siège annulaire arrière d'un clapet (40) à trois voies qui est mobile progressivement entre une position dans laquelle, la tige (32) de commande étant au repos, la chambre avant (20) et la chambre arrière (22) sont en communication, et une position dans laquelle, la tige (32) de commande étant actionnée, la deuxième pression (P₂) régnant dans la chambre arrière (22) augmente, le clapet (40) mettant la chambre arrière (22) en communication avec la pression (Pₐ) supérieure à la première pression (P₁), et
du type dans lequel le servomoteur (12) comporte un palpeur (42), agencé à l'extrémité avant du plongeur (36) et traversant un alésage (44) débouchant du piston (24) qui, dans la position de repos de la tige (32) de commande, est agencé à une distance (d) de saut déterminée du disque (28) de réaction et qui est susceptible, lorsque la tige (32) de commande est actionnée suivant un effort d'entrée d'intensité supérieure à une première intensité déterminée, de venir au contact du disque (28) de réaction de manière à transmettre au plongeur (36) et à la tige (32) de commande l'effort de réaction du maître-cylindre (14), le rapport de la surface du disque (28) de réaction en contact avec la cage (30) et de la surface du palpeur (42) déterminant un premier rapport d'assistance déterminé,
et du type dans lequel la cage (30) comporte au moins une paroi (46) mobile de décompression qui est susceptible, lorsque la tige (32) de commande est actionnée suivant un effort d'entrée d'intensité supérieure à une seconde intensité déterminée supérieure à la première, de se déplacer pour créer dans la cage (30) un volume supplémentaire dans lequel une partie avant (48) du disque (28) de réaction est susceptible de s'expandre pour réduire l'effort de réaction transmis au palpeur (42) par l'intermédiaire de la face arrière (50) du disque (28) de réaction, le rapport de la surface du disque (28) de réaction en contact avec la cage (30) et de la surface du palpeur (42) déterminant un second rapport d'assistance supérieur au premier,
**caractérisé en ce qu'**il comporte une tige (52) de poussée indépendante, qui est interposée entre le disque (28) de réaction et le piston (54) primaire du maître cylindre, et qui comporte :
- un tronçon arrière (56), dont une face arrière (58) est agencée au contact du disque (28) de réaction, et dans lequel une lumière (60) débouchant dans la face arrière (58) reçoit un piston (62) de décompression conforme, d'un encombrement (E) transversal déterminé, qui comporte au moins deux branches (64) radiales et dont une face arrière forme la paroi mobile (46) de décompression,
- un tronçon avant tubulaire (66), dont un alésage (68) qui débouche à l'extrémité avant de la lumière (60), et qui est d'un diamètre (D) inférieur à l'encombrement (E) transversal déterminé, reçoit un ressort (70) hélicoïdal recevant une tige de rappel (72) du piston (62) de décompression,
pour proposer un piston (62) de décompression d'encombrement (E) transversal maximal et une tige (52) de poussée de diamètre minimal.

2. Servofrein (10) selon la revendication 1, **caractérisé en ce que**, à la jonction du tronçon avant (66) et du tronçon arrière (56) :
- le tronçon arrière (56) comporte au moins une face (74) qui forme butée axiale pour le ressort (70) de rappel du piston (62) de décompression, qui est agencée angulairement entre deux branches (64) consécutives du piston (62) de décompression, et qui fait saillie transversalement à l'intérieur de l'alésage (68),
- le tronçon avant (66) comporte au moins une face (76) qui forme butée axiale pour le piston (62) de décompression, qui est agencée dans le prolongement axial d'au moins une des deux branches (64) du piston (62) de décompression, et qui fait saillie à l'intérieur de la lumière (60).

3. Servofrein (10) selon la revendication 2, **caractérisé en ce que** l'extrémité avant de chaque branche (64) du piston (62) de décompression comporte au moins une face (78) d'appui pour le ressort (70) hélicoïdal, qui est agencée suivant le diamètre (D) du tronçon avant (66) tubulaire.

4. Servofrein (10) selon l'une des revendications 2 ou 3, **caractérisé en ce que** l'extrémité avant de chaque branche (64) du piston de décompression comporte au moins une face (80) de butée axiale destinée à coopérer avec la face (76) de butée axiale du tronçon avant (66).

5. Servofrein (10) selon l'une des revendications 1 à 4, **caractérisé en ce que** la tige (72) de rappel du piston (62) de décompression est d'un diamètre correspondant sensiblement au diamètre intérieur du ressort (70) hélicoïdal.

6. Servofrein (10) selon l'une des revendications 3 à 5, **caractérisé en ce que** la tige (52) de poussée comporte une rondelle (79) d'appui qui est montée entre le ressort (70) hélicoïdal et la face d'appui (78) du piston (62) de décompression, qui est d'un diamètre extérieur correspondant à celui de l'alésage (68) du tronçon avant (66) et qui est d'un diamètre intérieur correspondant à celui de la tige (72) de rappel du piston (62) de décompression.

7. Servofrein (10) selon l'une quelconque des revendications 1 à 6, **caractérisé en ce que** la tige (52) de poussée comporte :
- une partie avant (67) tubulaire qui comporte une partie du tronçon avant (66),
- une partie arrière (57) qui comporte intérieurement l'autre partie du tronçon avant (66) et le tronçon arrière (56).

8. Servofrein (10) selon la revendication précédente, **caractérisé en ce que** la partie avant (67) est montée serrée dans un alésage (88) d'extrémité avant de la partie arrière (57).

9. Servofrein (10) selon la revendication 7, **caractérisé en ce que** la partie avant (67) est sertie sur une portée (82) cylindrique d'extrémité avant de la partie arrière (57) suivant une position axiale variable permettant de régler la précharge du ressort (70) hélicoïdal

10. Servofrein (10) selon l'une quelconque des revendications 7 à 9, **caractérisé en ce que** la partie avant (67) tubulaire comporte à son extrémité avant un doigt axial (90) destiné à permettre l'appui de la tige (52) de poussée sur le piston primaire (54) du maître-cylindre (14).

11. Servofrein (10) selon l'une quelconque des revendications 1 à 10, **caractérisé en ce que** le piston (62) de décompression comporte trois branches (64) réparties angulairement de manière régulière.

12. Servofrein (10) selon l'une quelconque des revendications 1 à 10, **caractérisé en ce que** le piston (62) de décompression comporte deux branches (64) opposées qui s'étendent radialement jusqu'à la périphérie de la face arrière (58) du tronçon arrière (56).

## Claims

1. Boosted brake (10) for a motor vehicle, of the type which comprises a pneumatic brake booster (12) actuating a master cylinder (14),
of the type in which the booster (12) comprises a rigid casing (16) inside which can move a transverse partition (18) sealably delimiting a front chamber (20) subjected to a first pressure (P₁) and a rear chamber (22) subjected to a second pressure (P₂) varying between the first pressure (P₁) and a pressure (Pₐ) greater than the first pressure (P₁),
of the type in which the booster (12) comprises a moving piston (24) fixed to the moving partition (18) and comprising a front face (26) which can act on a primary piston (54) of the master cylinder (14) by way of a reaction disk (28) housed in a cage (30) interposed between the moving piston (24) and the primary piston (54),
of the type in which the booster (12) comprises a control rod (32) which moves in the piston (24) selectively as a function of an axial input force exerted forward against a return force exerted on the rod (32) by a return spring (34),
of the type in which the booster (12) comprises a plunger (36) which is arranged in front of the control rod (32) in the piston (24) and which comprises at its rear end (38) at least one annular rear seat of a three-way valve (40) which can move progressively between a position in which, with the control rod (32) at rest, the front chamber (20) and the rear chamber (22) are in communication, and a position in which, with the control rod (32) actuated, the second pressure (P₂) prevailing in the rear chamber (22) increases, the valve (40) placing the rear chamber (22) in communication with the pressure (Pₐ) which is greater than the first pressure (P₁), and
of the type in which the booster (12) comprises a feeler (42), arranged at the front end of the plunger (36) and passing through a bore (44) leading from the piston (24), which, when the control rod (32) is in the rest position, is arranged at a defined jump distance (d) from the reaction disk (28) and which is able, when the control rod (32) is actuated with an input force whose intensity is greater than a first defined intensity, to come into contact with the reaction disk (28) in such a way as to transmit to the plunger (36) and to the control rod (32) the reaction force of the master cylinder (14), the ratio of the area of the reaction disk (28) in contact with the cage (30) to the area of the feeler (42) in contact with the reaction disk (28) defining a first defined boost ratio,
and of the type in which the cage (30) comprises at least one moving decompression wall (46) which, when the control rod (32) is actuated with an input force whose intensity is greater than a second defined intensity greater than the first, is able to move so as to create in the cage (30) an additional volume in which a front part (48) of the reaction disk (28) is able to expand in order to reduce the reaction force transmitted to the feeler (42) by way of the rear face (50) of the reaction disk (28), the ratio of the area of the reaction disk (28) in contact with the cage (30) to the area of the feeler (42) in contact with the reaction disk (28) defining a second boost ratio, which is greater than the first,
**characterized in that** it comprises an independent push rod (52) which is interposed between the reaction disk (28) and the primary piston (54) of the master cylinder, and which comprises:
- a rear section (56) having a rear face (58) arranged in contact with the reaction disk (28) and in which an opening (60) leading into the rear face (58) accommodates a matching decompression piston (62), of a defined transverse size (E), which comprises at least two radial branches (64) and a rear face of which forms the moving decompression wall (46),
- a tubular front section (66) of the outside diameter of the primary piston (54) of the master cylinder (14), of which a bore (68), which leads out at the front end of the opening (60) and has a diameter (D) smaller than the defined transverse size (E), accommodates a helical spring (70) accommodating a return rod (72) of the decompression piston (62),
in order to provide a decompression piston (62) of maximum transverse size (E) and a push rod (52) of minimum diameter.

2. Boosted brake (10) according to Claim 1, **characterized in that**, at the junction of the front section (66) and of the rear section (56):
- the rear section (56) comprises at least one face (74) which forms an axial stop for the return spring (70) of the decompression piston (62), which face is arranged angularly between two successive branches (64) of the decompression piston (62) and which projects transversely inside the bore (68),
- the front section (66) comprises at least one face (76) which forms an axial stop for the decompression piston (62), which face is arranged in the axial continuation of at least one of the two branches (64) of the decompression piston (62) and which projects inside the opening (60).

3. Boosted brake (10) according to Claim 2, **characterized in that** the front end of each branch (64) of the decompression piston (62) comprises at least one bearing face (78) for the helical spring (70), which bearing face is arranged according to the diameter (D) of the tubular front section (66).

4. Boosted brake (10) according to either of Claims 2 and 3, **characterized in that** the front end of each branch (64) of the decompression piston comprises at least one axial stop face (80) intended to interact with the axial stop face (76) of the front section (66) .

5. Boosted brake (10) according to one of Claims 1 to 4, **characterized in that** the return rod (72) of the decompression piston (62) has a diameter corresponding substantially to the inside diameter of the helical spring (70).

6. Boosted brake (10) according to one of Claims 3 to 5, **characterized in that** the push rod (52) comprises a bearing washer (79) which is fitted between the helical spring (70) and the bearing face (78) of the decompression piston (62) and has an outside diameter corresponding to that of the bore (68) of the front section (66) and has an inside diameter corresponding to that of the return rod (72) of the decompression piston (62).

7. Boosted brake (10) according to any one of Claims 1 to 6, **characterized in that** the push rod (52) comprises:
- a tubular front part (67) which comprises one part of the front section (66),
- a rear part (57) which internally comprises the other part of the front section (66) and the rear section (56).

8. Boosted brake (10) according to the preceding claim, **characterized in that** the front part (67) is tightly fitted in a front-end bore (88) of the rear part (57).

9. Boosted brake (10) according to Claim 7, **characterized in that** the front part (67) is crimped onto a cylindrical front-end bearing surface (82) of the rear part (57) in a variable axial position allowing the preload of the helical spring (70) to be adjusted.

10. Boosted brake (10) according to any one of Claims 7 to 9, **characterized in that** the tubular front part (67) comprises, at its front end, an axial finger (90) intended to allow the push rod (52) to press on the primary piston (54) of the master cylinder (14).

11. Boosted brake (10) according to any one of Claims 1 to 10, **characterized in that** the decompression piston (62) comprises three branches (64) distributed angularly in a regular manner.

12. Boosted brake (10) according to any one of Claims 1 to 10, **characterized in that** the decompression piston (62) comprises two opposed branches (64) which extend radially as far as the periphery of the rear face (58) of the rear section (56).

## Patentansprüche

1. Servobremse (10) für ein Kraftfahrzeug, vom Typ, der einen pneumatischen Servomotor (12) zur Bremsunterstützung aufweist, welcher einen Hauptzylinder (14) betätigt,
vom Typ, bei dem der Servomotor (12) ein starres Gehäuse (16) aufweist, in dem eine quer verlaufende Wand (18) beweglich ist, die in dichter Weise eine vordere Kammer (20), die einem ersten Druck (P₁) ausgesetzt ist, und eine hintere Kammer (22) begrenzt, die einem zweiten Druck (P₂) ausgesetzt ist, welcher zwischen dem ersten Druck (P₁) und einem Druck (Pₐ) variiert, der höher ist als der erste Druck (P₁),
vom Typ, bei dem der Servomotor (12) einen beweglichen, fest mit der beweglichen Wand (18) verbundenen Kolben (24) aufweist, der eine vordere Fläche (26) aufweist, die einen Primärkolben (54) des Hauptzylinders (14) mittels einer Reaktionsscheibe (28) beaufschlagen kann, welche in einem Halter (30) angeordnet ist, der zwischen dem beweglichen Kolben (24) und dem Primärkolben (54) angeordnet ist,
vom Typ, bei dem der Servomotor (12) eine Steuerstange (32) aufweist, die sich im Kolben (24) selektiv in Abhängigkeit von einer axialen Eingangskraft verlagert, welche entgegen einer durch eine Rückstellfeder (34) auf die Stange (32) ausgeübten Rückstellkraft nach vorne ausgeübt wird,
vom Typ, bei dem der Servomotor (12) einen Tauchkolben (36) aufweist, der im Kolben (24) im vorderen Teil der Steuerstange (32) angeordnet ist und an seinem hinteren Ende (38) mindestens einen ringförmigen, hinteren Sitz eines Dreiwegeventils (40) aufweist, das progressiv zwischen einer Position, in der die vordere Kammer (20) und die hinteren Kammer (22) verbunden sind, da sich die Steuerstange (32) in der Ruheposition befindet, und einer Position beweglich ist, in der der zweite, in der hinteren Kammer (22) herrschende Druck (P₂) steigt, da die Steuerstange (32) betätigt wird, wobei das Ventil (40) die hintere Kammer (22) mit dem Druck (Pₐ) verbindet, der höher ist als der ersten Druck (P₁), und
vom Typ, bei dem der Servomotor (12) einen Taster (42) aufweist, der am vorderen Ende des Tauchkolbens (36) angeordnet ist und eine Bohrung (44) durchquert, die aus dem Kolben (24) ausgeht, der in der Ruheposition der Steuerstange (32) in einer bestimmten Sprungentfernung (d) von der Reaktionsscheibe (28) angeordnet ist, und der mit der Reaktionsscheibe (28) in Kontakt gelangen kann, wenn die Steuerstange (32) gemäß einer Eingangskraft betätigt wird, deren Stärke größer ist als eine erste bestimmte Stärke, so dass dem Tauchkolben (36) und der Steuerstange (32) die Reaktionskraft des Hauptzylinders (14) übertragen wird, wobei das Verhältnis zwischen der Oberfläche der Reaktionsscheibe (28), die den Halter (30) berührt, und der Oberfläche des Tasters (42) ein erstes bestimmtes Unterstützungsverhältnis bestimmt,
und vom Typ, bei dem der Halter (30) mindestens eine bewegliche Dekompressionswand (46) aufweist, die sich verlagern kann, wenn die Steuerstange (32) gemäß einer Eingangskraft betätigt wird, deren Stärke größer ist als eine zweite bestimmte Stärke, welche größer ist als die erste, um im Halter (30) ein zusätzliches Volumen zu bilden, in dem sich ein vorderer Teil (48) der Reaktionsscheibe (28) ausdehnen kann, um die Reaktionskraft zu verringern, die mittels der hinteren Fläche (50) der Reaktionsscheibe (28) auf den Taster (42) übertragen wird, wobei das Verhältnis zwischen der Oberfläche der Reaktionsscheibe (28), die den Halter (30) berührt, und der Oberfläche des Tasters (42) ein zweites Unterstützungsverhältnis bestimmt, das größer ist als das erste,
**dadurch gekennzeichnet, dass** sie eine unabhängige Schubstange (52) aufweist, die zwischen der Reaktionsscheibe (28) und dem Primärkolben (54) des Hauptzylinders angeordnet ist und folgendes aufweist:
- einen hinteren Abschnitt (56), bei dem eine hintere Fläche (58) so angeordnet ist, dass sie die Reaktionsscheibe (28) berührt, und bei dem ein in die hintere Fläche (58) mündendes Langloch (60) einen konformen Dekompressionskolben (62) mit bestimmten Querabmessungen (E) aufnimmt, der mindestens zwei radiale Arme (64) aufweist und bei dem eine hintere Fläche die bewegliche Dekompressionswand (46) bildet,
- einen röhrenförmigen vorderen Abschnitt (66), bei dem eine Bohrung (68), die am vorderen Ende des Langlochs (60) mündet und einen Durchmesser (D) besitzt, der kleiner ist als die bestimmten Querabmessungen (E), eine Spiralfeder (70) aufnimmt, welche eine Stange (72) zum Zurückstellen des Dekompressionskolbens (62) aufnimmt,
um einen Dekompressionskolben (62) mit maximalen Querabmessungen (E) und eine Schubstange (52) mit minimalem Durchmesser vorzuschlagen.

2. Servobremse (10) nach Anspruch 1, **dadurch gekennzeichnet, dass** an der Verbindungsstelle zwischen dem vorderen Abschnitt (66) und dem hinteren Abschnitt (56)
- der hintere Abschnitt (56) mindestens eine Fläche (74) aufweist, die einen axialen Anschlag für die Feder (70) zum Zurückstellen des Dekompressionskolbens (62) bildet, die winkelmäßig zwischen zwei aufeinander folgenden Armen (64) des Dekompressionskolbens (62) angeordnet ist und die quer im Inneren der Bohrung (68) hervorsteht,
- der vordere Abschnitt (66) mindestens eine Fläche (76) aufweist, die einen axialen Anschlag für den Dekompressionskolben (62) bildet, die in der axialen Verlängerung mindestens eines der beiden Arme (64) des Dekompressionskolbens (62) angeordnet ist und die quer im Inneren des Langlochs (60) hervorsteht.

3. Servobremse (10) nach Anspruch 2, **dadurch gekennzeichnet, dass** das vordere Ende jedes Arms (64) des Dekompressionskolbens (62) mindestens eine Anlagefläche (78) für die Spiralfeder (70) aufweist, die gemäß dem Durchmesser (D) des röhrenförmigen vorderen Abschnitts (66) angeordnet ist.

4. Servobremse (10) nach Anspruch 2 oder 3, **dadurch gekennzeichnet, dass** das vordere Ende jedes Arms (64) des Dekompressionskolbens mindestens eine axiale Anschlagfläche (80) aufweist, welche mit der axialen Anschlagfläche (76) des vorderen Abschnitts (66) zusammenwirken soll.

5. Servobremse (10) nach einem der Ansprüche 1 bis 4, **dadurch gekennzeichnet, dass** die Stange (72) zum Zurückstellen des Dekompressionskolbens (62) einen Durchmesser besitzt, der im Wesentlichen dem Innendurchmesser der Spiralfeder (70) entspricht.

6. Servobremse (10) nach einem der Ansprüche 3 bis 5, **dadurch gekennzeichnet, dass** die Schubstange (52) eine Anlagescheibe (79) aufweist, die zwischen der Spiralfeder (70) und der Anlagefläche (78) des Dekompressionskolbens (62) angeordnet ist, deren Außendurchmesser dem der Bohrung (68) des vorderen Abschnitts (66) entspricht und deren Innendurchmesser dem der Stange (72) zum Zurückstellen des Dekompressionskolbens (62) entspricht.

7. Servobremse (10) nach einem der Ansprüche 1 bis 6, **dadurch gekennzeichnet, dass** die Schubstange (52) folgendes aufweist:
- einen röhrenförmigen vorderen Teil (67), der einen Teil des vorderen Abschnitts (66) aufweist,
- einen hinteren Teil (57), der innen den anderen Teil des vorderen Abschnitts (66) und den hinteren Abschnitt (56) aufweist.

8. Servobremse (10) nach dem vorhergehenden Anspruch, **dadurch gekennzeichnet, dass** der vordere Teil (67) so angebracht ist, dass er in einer Bohrung (88) am vorderen Ende des hinteren Teils (57) geklemmt ist.

9. Servobremse (10) nach Anspruch 7, **dadurch gekennzeichnet, dass** der vordere Teil (67) gemäß einer variablen axialen Position, die das Einstellen der Vorspannung der Spiralfeder (70) ermöglicht, auf eine zylindrische Auflagefläche (82) am vorderen Ende des hinteren Teils (57) gefalzt ist.

10. Servobremse (10) nach einem der Ansprüche 7 bis 9, **dadurch gekennzeichnet, dass** der röhrenförmige vordere Teil (67) an seinem vorderen Ende einen axialen Zapfen (90) aufweist, der das Anliegen der Schubstange (52) am Primärkolben (54) des Hauptzylinders (14) ermöglichen soll.

11. Servobremse (10) nach einem der Ansprüche 1 bis 10, **dadurch gekennzeichnet, dass** der Dekompressionskolben (62) drei Arme (64) aufweist, die winkelmäßig gleichmäßig verteilt sind.

12. Servobremse (10) nach einem der Ansprüche 1 bis 10, **dadurch gekennzeichnet, dass** der Dekompressionskolben (62) zwei entgegengesetzte Arme (64) aufweist, die sich radial bis zum Umfang der hinteren Fläche (58) des hinteren Abschnitts (56) erstrecken.
